# EUROPEAN PATENT SPECIFICATION

(11) **EP 1 055 535 B1**
(45) Date of publication and mention of the grant of the patent: **09.04.2003**
(21) Application number: 00110507.1
(22) Date of filing: 17.05.2000
(51) Int. Cl.: B60H 1/00, B62D 25/08, B62D 65/00, B60K 11/04

(54) **Preassembled frontal module for vehicles**
Frontzusammenbaueinheit für Fahrzeuge
Module frontal préassemblé pour véhicules

(30) Priority: 25.05.1999 IT TO990439
(43) Date of publication of application: 29.11.2000
(73) Proprietor: DENSO THERMAL SYSTEMS S.p.A., 10046 Poirino (Torino) (IT)
(72) Inventor: Masciandara, Eustachio, 10098 Rivoli (IT); Mussatto, Danilo, 10073 Cirié(Torino) (IT)
(74) Representative: Marchitelli, Mauro

(56) References cited:
- EP-A- 0 437 780
- DE-A- 19 831 256
- DE-U- 9 114 734
- US-A- 5 219 017

## Description

The present invention relates to a preassembled frontal module for vehicles, according to the preamble of claim 1, which is known from DE-U-9114734. This document discloses a frontal module for vehicles comprising a support structure, a radiator, a condenser removably connected to the support structure and arranged so that they can be removed independently from each other without removing the support structure from the vehicle.

The problem on which the present invention is based is the great time necessary for removing and mounting again thermic components (radiator, condenser, etc.) from the frontal module of the vehicle for carrying out maintenance operations. In fact, in known frontal modules, the radiator and the condenser are often placed in positions with difficult access and for removing them it is often necessary to remove a certain number of components which form part of the frontal module. The time required for maintenance operations on the thermic components of the frontal module is high also because in known solutions it is not possible in general to remove either the condenser or the radiator independently from each other. Therefore, for removing only one of such components it is necessary to either isolate or drain both the engine cooling circuit and the air conditioning system of the vehicle.

In order to overcome such drawbacks, the object of the present invention is a preassembled frontal module having the characteristics forming the subject of the main claim.

The present invention will now be disclosed in detail with reference to the attached drawings, given purely by way of non-limiting example, in which:
- figure 1 is a schematic perspective view of a preassembled frontal module according to the invention,

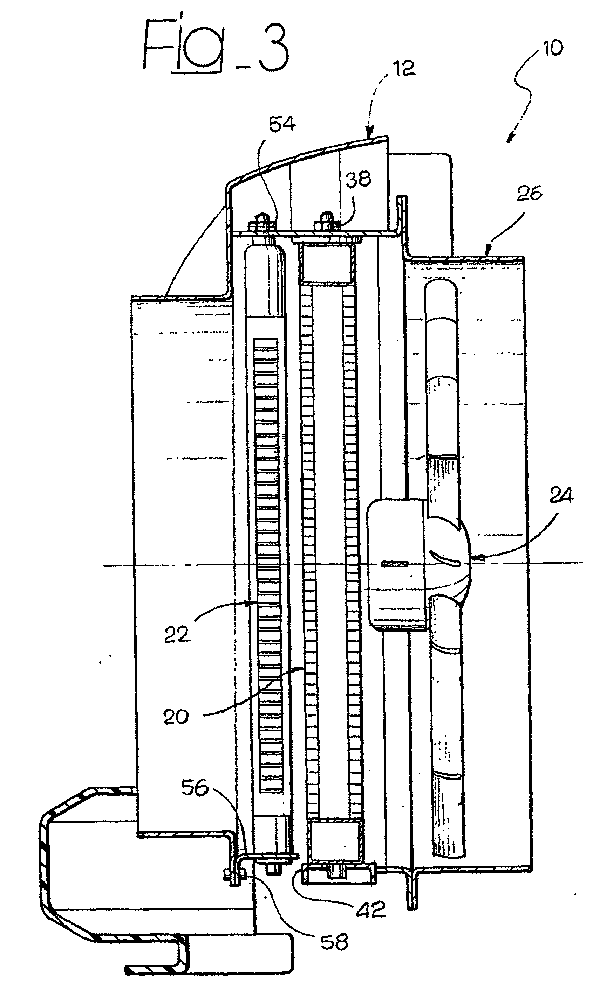

- figure 2 is a partially exploded perspective view of the module of figure 1,
- figures 3 and 4 are schematic cross sections taken on the lines III-III and IV-IV of figure 1, and
- figures 5 and 6 are perspective views showing the steps of removing of the condenser and the radiator in a frontal module according to the invention.

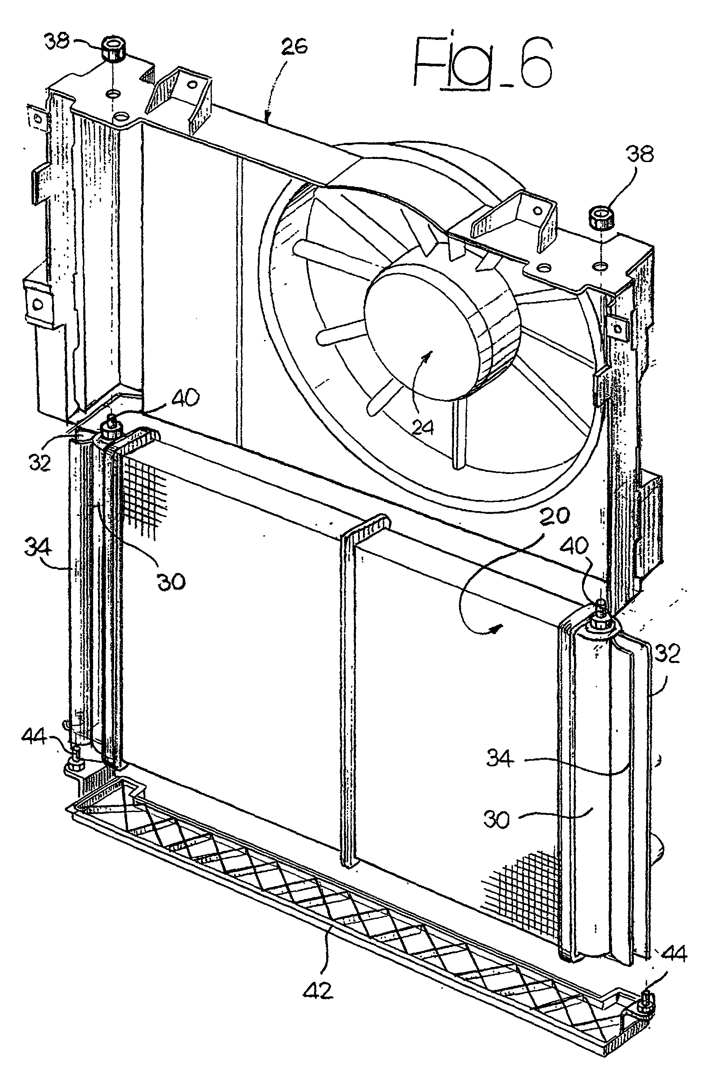

With reference to the figures, a preassembled frontal module for vehicles is indicated at 10. The module 10 comprises a support structure of plastics material 12 to which several components are fixed, such as for instance a pair of headlights 14, a stiffening beam 16, a lock 18 for closing the vehicle hood (not shown), etc. The frontal module 10 comprises also a radiator 20 for cooling the internal combustion engine of the vehicle and a condenser 22 included in the air conditioning system of the vehicle. An electric fan 24 is carried by a conveyor 26 facing the radiator 20 and fixed to the rear part of the support structure 12 (figures 3 and 6).

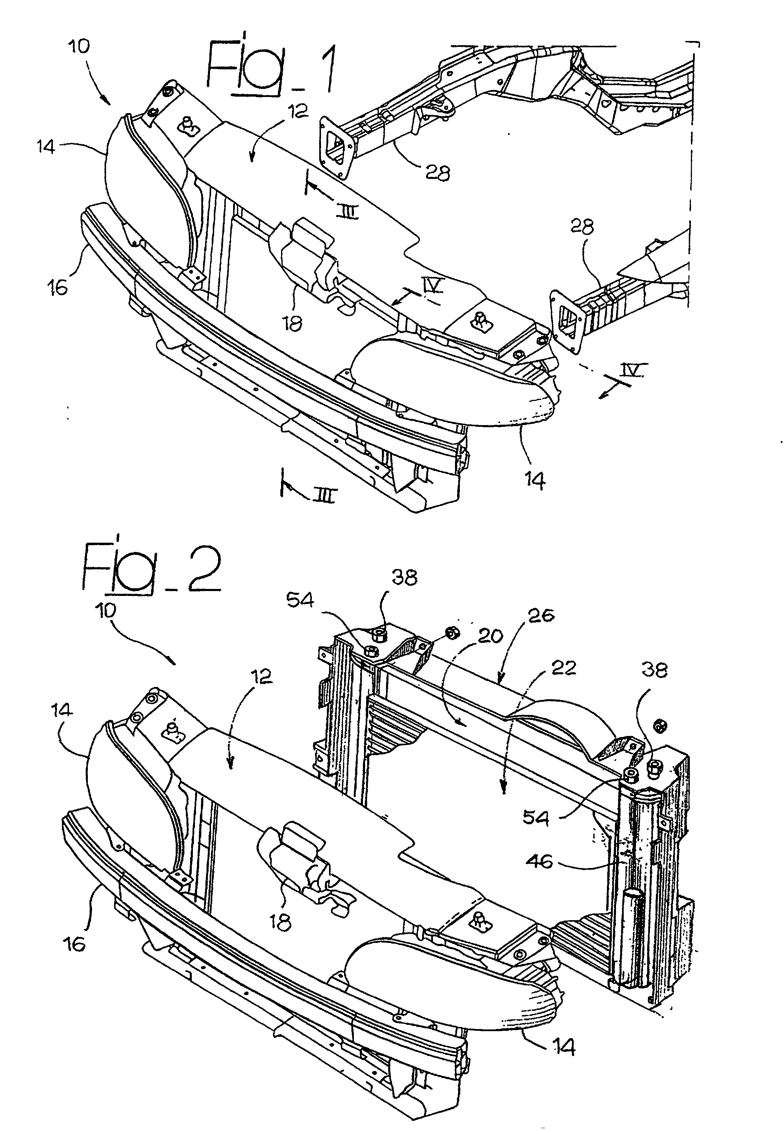

With reference to figure 1, the complete frontal module including the conveyor 26, the radiator 20, the condenser 22, the headlights 14 and possibly further components (for instance the intercooler, etc.) forms a preassembled unit which is mounted on the frontal part of the vehicle. The support structure 12 is provided with fixing means per se known (not shown) for connecting the preassembled module 10 to a pair of longitudinal beams 28 which form part of the vehicle body.

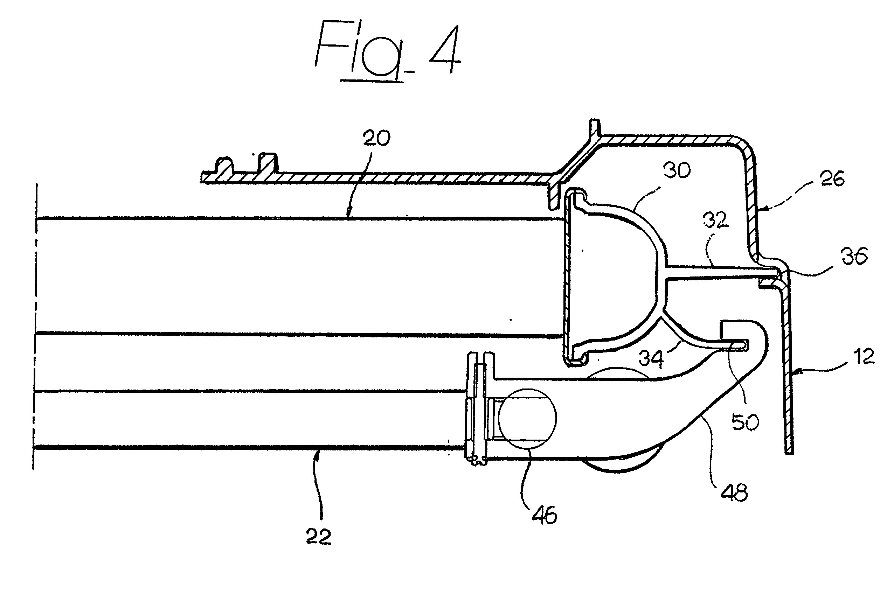

With reference to figures 4 to 6, the radiator 20 comprises a pair of header tanks 30 of plastics material mounted in a way per se known at the ends of a heat exchange core formed by tubes and fins. Each header tank 30 has a pair of integral ribs 32, 34 projecting from its outer surface and forming vertically oriented guide elements. As shown in particular in figure 4, the guide ribs 32 engage a vertical guide seat 36 which in the example shown in the figure is formed in correspondence of the joining zone between the conveyor 26 and the support structure 12. As an alternative, the guide seat 36 could be formed on either the support structure 12 or the conveyor 26. The guide seat 36 is open towards the bottom so that the radiator 20 can be mounted on the module 10 with a movement from the bottom upwards and can be removed with a movement from above downward. The engagement between the ribs 32 and the corresponding guide seats 36 ensures a precise positioning of the radiator 20 with respect to the remaining part of the frontal module 10. With reference to figures 3, 5 and 6, the radiator 20 is fixed either to the support structure 12 or to the conveyor 26 by means of a pair of nuts 38 which engage threaded stems 40 projecting from the upper portion of the header tanks 30. A lower beam 42 is also provided for supporting from below the radiator 40 and such beam 42 is fixed either to the conveyor 26 or to the support structure 12 by means of threaded elements 44.

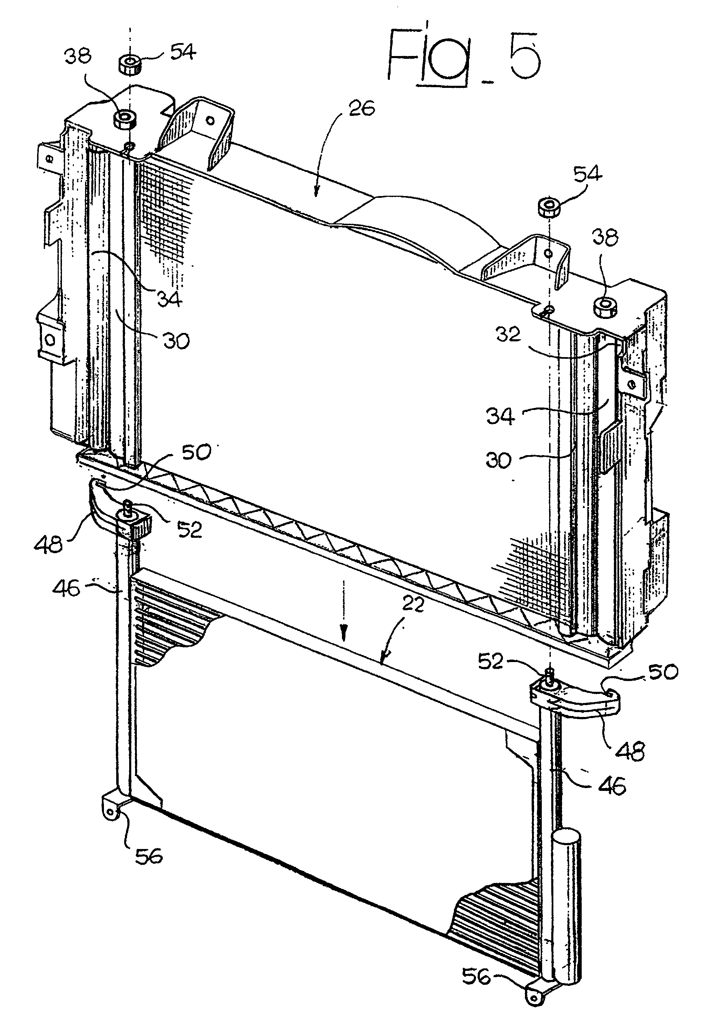

The second pair of ribs 34 forms a guide along which the condenser 22 is slidably mounted. As visible in particular in figures 5 and 6, the condenser 22 has a pair of tubular distributors 46 to which respective flanges 48 are fixed, each of which having a groove 50 which slidably engages a respective rib 34. The distributors 46 have at their upper ends respective threaded projecting portions 52 which are used for fixing the condenser either to the support structure 12 or to the conveyor 26 by means of nuts 54. The distributors 46 have at their lower ends respective flanges 56 which are used for fixing the lower end of the condenser 22 to the support structure 12 by means of screws indicated 58 in figure 3.

From the foregoing description it will be understood that both the radiator 20 and the condenser 22 can be removed independently from each other. After having removed the threaded elements for the connection either to the support structure 12 or to the conveyor 26, the radiator 20 or the condenser 22 can be removed with a movement from above downwards without the need for removing other components of the preassembled module. The radiator 20 or the condenser 22 can be mounted again with a movement from below upwards. Such movement is guided by the mutual cooperation of the ribs 22 with the guide seats 36 in case of the radiator 20 and from the cooperation of the grooves 50 with the guide ribs 34 in the case of the condenser 22. The system disclosed in the foregoing allows a reduction of the time for removing and mounting again the radiator and the condenser during maintenance operations as well as a reduction of the number of components which must be removed from the preassembled module for removing either the radiator or the condenser. Consequently, a reduction of maintenance costs is obtained. The solution in accordance with the invention permits also to obtain an optimal layout of the preassembled module in that other components can be installed in front or rear zones of the module traditionally used for removing the components.

## Claims

1. Preassembled frontal module for vehicles, comprising:
- a support structure (12),
- a radiator (20) for cooling the internal combustion engine of the vehicle,
- a condenser (22) included in the air conditioning system of the vehicle, and
- support and fixing means for removably connecting the radiator and the condenser to the support structure,
**characterized by** comprising vertical guide means (32, 36, 34, 28) associated to the radiator (20) and the condenser (22), arranged so that the radiator (20) and the condenser (22) are vertically slidable with respect to the frontal module (10) independently from each other and can be removed and mounted again independently by a movement from above downwards and vice versa.

2. Frontal module according to claim 1, **characterized in that** the radiator (20) has at its lateral ends a first pair of guide ribs (32) slidably engaging respective guide seats (36).

3. Frontal module according to claim 2, **characterized in that** said guide seats (36) are formed in correspondence with a junction zone between said support structure (12) and a conveyor (26) carrying an electric fan (24).

4. Frontal module according to claim 2, **characterized in that** the radiator (20) has a second pair of guide ribs (34) which are slidably engaged by respective flanges (28) fixed to lateral portions of the condenser (22).

## Patentansprüche

1. Vormontiertes Frontmodul für Fahrzeuge mit:
einem Trägeraufbau (12),
einem Kühler (20) zum Kühlen der Brennkraftmaschine des Fahrzeugs,
einem Kondensator (22), der in dem Klimaanlagensystem des Fahrzeugs beinhaltet ist, und
Halte- und Befestigungseinrichtungen um den Kühler und den Kondensator mit dem Trägeraufbau abnehmbar zu verbinden,
**gekennzeichnet durch**
vertikale Führungseinrichtungen (32, 36, 34, 28), die den Kühler (20) und den Kondensator (22) zugeordnet und so angeordnet sind, dass der Kühler (20) und der Kondensator (22) voneinander unabhängig bezüglich des Frontmoduls (10) vertikal verschiebbar sind und voneinander unabhängig **durch** eine von oben nach unten und umgekehrt gerichtete Bewegung abnehmbar und wieder montierbar sind.

2. Frontmodul nach Anspruch 1,
**dadurch gekennzeichnet, dass**
der Kühler (20) an seinen seitlichen Enden ein erstes Paar Führungsrippen (32) hat, das verschiebbar mit zugehörigen Führungssitzen (36) eingreift.

3. Frontmodul nach Anspruch 2,
**dadurch gekennzeichnet, dass**
die Führungssitze (36) in Übereinstimmung mit einem Verbindungsbereich von dem Trägeraufbau (12) mit einem Rahmen (26) ausgebildet sind, der einen elektrischen Lüfter (24) trägt.

4. Frontmodul nach Anspruch 2,
**dadurch gekennzeichnet, dass**
der Kühler (20) ein zweites Paar Führungsrippen (34) hat, die verschiebbar mit zugehörigen Flanschen (28) in Eingriff sind, die an seitlichen Abschnitten des Kondensators (22) befestigt sind.

## Revendications

1. Module frontal préassemblé pour véhicules, comprenant :
- une structure de support (12),
- un radiateur (20) pour refroidir le moteur à combustion interne du véhicule,
- un condensateur (22) compris dans le système de conditionnement d'air du véhicule et
- des moyens de support et de fixation pour accoupler de manière amovible le radiateur et le condensateur à la structure de support,
**caractérisé en ce qu'**il comprend des moyens de guidage verticaux (32, 36, 34, 28) associés au radiateur (20) et au condensateur (22), agencés de telle sorte que le radiateur (20) et le condensateur (22) puissent coulisser verticalement par rapport au module frontal (10) indépendamment l'un de l'autre et puissent être déposés et montés indépendamment par un mouvement de haut en bas et vice versa.

2. Module frontal selon la revendication 1, **caractérisé en ce que** le radiateur (20) possède au niveau de ses extrémités latérales une première paire de nervures de guidage (32) se mettant en prise de manière coulissante avec les logements de guidage (36) correspondants.

3. Module frontal selon la revendication 2, **caractérisé en ce que** lesdits logements de guidage (36) sont formés en liaison avec une zone de jonction entre ladite structure de support (12) et un convoyeur (26) supportant un ventilateur électrique (24).

4. Module frontal selon la revendication 2, **caractérisé en ce que** le radiateur (20) possède une seconde paire de nervures de guidage (34) qui sont en prise de manière coulissante avec les brides (28) correspondantes fixées aux parties latérales du condensateur (22).
